# EUROPÄISCHE PATENTSCHRIFT

(11) **EP 2 594 808 B1**
(45) Veröffentlichungstag und Bekanntmachung des Hinweises auf die Patenterteilung: **16.07.2014**
(21) Anmeldenummer: 11189734.4
(22) Anmeldetag: 18.11.2011
(51) Int. Cl.: F16K 27/00, F15B 15/14

(54) **Hydraulikbauteil**
Hydraulic component
Composant hydraulique

(43) Veröffentlichungstag der Anmeldung: 22.05.2013
(73) Patentinhaber: HAWE Hydraulik SE, 81673 München (DE)
(72) Erfinder: Macit, Recep, 81673 München (DE); Manhart, Anton, 84405 Dorfen (DE)
(74) Vertreter: Grünecker, Kinkeldey, Stockmair & Schwanhäusser

(56) Entgegenhaltungen:
- EP-A2- 1 041 292
- EP-A2- 1 094 227
- WO-A1-2010/081449
- DE-A1- 3 831 909
- JP-U- 54 106 478
- US-A- 3 474 710
- US-A- 5 355 774

## Beschreibung

Die Erfindung betrifft einen Hydraulikbauteil der im Oberbegriff des Patentanspruches 1 angegebenen Art.

Bei Hydraulikbauteilen der Hochdruckhydraulik, beispielsweise Ventilblöcken, Schieberblöcken, Zylindern, und dgl., ist es übliche Praxis, eine Innenbohrung in einem Gehäuse nach außen druckdicht zu verschließen, beispielsweise nachdem Funktionskomponenten in das Gehäuse eingesetzt worden sind.

Hierzu verwendet man üblicherweise einen Verschlussstopfen mit einem eingeknüpften O-Ring, der in die Mündung der Innenbohrung bis zur Anlage an einer Ringschulter eingepresst wird und dann mit seiner außenliegenden Frontseite gegenüber der Gehäuseseite versenkt positioniert ist, ehe eine in der Seite des Gehäuses geformte Freifräsung über den gesamten Umfang oder einen Teil des Umfangs verstemmt wird, so dass Material des Gehäuses hinter den Verschlussstopfen in die Mündung der Innenbohrung kaltverformt wird und den Verschlussstopfen an der Ringschulter festlegt. Die Abdichtwirkung des Verschlussstopfens wird primär durch den O-Ring erzielt. Dieser bekannte Verschlussstopfen baut axial kurz, erzeugt keinen Überstand an der Seite des Gehäuses und ist über lange Standzeiten druckdicht. Falls jedoch Zugang zur Innenbohrung gebraucht wird, beispielsweise zum Austausch oder der Reparatur einer Funktionskomponente, lässt sich der Verschlussstopfen nur unter Beschädigung ausbauen und meist nicht mehr verwenden. Auch das Gehäuse wird im Bereich der Verstemmung beschädigt.

Aus US 3 474 710 A ist ein Hydraulikbauteil in Form eines doppelseitig beaufschlagbaren Hydraulikzylinders bekannt, dessen Gehäuse eine beidendig offene Zylinderhülse ist, in deren offene Enden Funktionskomponenten des Hydraulikzylinders bildende Zylinderböden mit O-Ringen eingesetzt und durch die Zylinderhülse und Einschnitt in den Zylinderböden greifende Stifte positioniert sind. Jeder Zylinderboden hat eine Mehrfachfunktion, nämlich einen radialen Druckanschluss mit Innengewinde zum Montieren eines Druckleitungsendes, eine zum Inneren der Zylinderhülse offene, mit dem Druckanschluss kommunizierende Sackbohrung und einen außenliegenden Überstand annähernd mit der Länge eines Drittels der Länge der Zylinderhülse. Die Überstände dienen zum Verankern des Hydraulikzylinders und sind entweder mit einem Außengewinde oder einem Anschlussauge ausgebildet. Die Zylinderböden leisten eine Verschlussstopfenfunktion, müssen jedoch jeweils in einer exakt vorbestimmten Drehlage eingebaut sein. Zum Ausbau, ohne Beschädigung des Zylinderbodens und der Zylinderhülse, müssen nicht nur die Stifte, sondern auch die Druckleitungsenden demontiert werden, und wird zum Herausziehen jedes Zylinderbodens an dem für die Verankerungsfunktion vorgesehenen Überstand angegriffen.

Ähnliche Prinzipien zum Positionieren und Festlegen von Funktionskomponenten bei hydraulischen oder pneumatischen Einrichtungen sind bekannt aus DE 38 31 909 A, US 5 355 774 A, JP 54-106478 A, WO 2010/081449 A, EP 1 041 292 A und EP 1 094 227 A.

Wird hingegen die Innenbohrung mit einer Verschlussschraube verschlossen, beispielsweise wie aus dem Katalog 4100-6/TE, Februar 2004 "Ermeto Original Verschraubungstechnik", der Firma Parker Hannifin (Internet: http://www.parker.com), Seite 15, Typen ROV, VSTI M-OR, VSTI M/RED bekannt, dann resultiert die eingebrachte Verschlussschraube in einem unerwünschten Überstand über die Einbringseite des Gehäuses, und ist eine aufwändige Bearbeitung in der Innenbohrung erforderlich. Wird, was denkbar ist, die Verschlussschraube versenkt eingebracht, so dass sie mit der Einbringseite des Gehäuses bündig abschließt, dann muss wegen der für die Hydraulikfunktion erforderlichen Innenlänge der Innenbohrung das Gehäuse entsprechend verlängert werden. Diese Nachteile werden bislang als unabdingbar in Kauf genommen, weil die Verschlussschraube den Vorteil bietet, jederzeit wieder demontierbar und wieder verwendbar zu sein.

Der Erfindung liegt die Aufgabe zugrunde, einen Hydraulikbauteil mit einem Verschlussstopfen anzugeben, der kompakt und einfach handhabbar und herstellbar und mehrfach verwendbar ist.

Die gestellte Aufgabe wird mit den Merkmalen des Patentanspruchs 1 gelöst.

Da der Verschlussstopfen, der für die Abdichtwirkung nur eine geringe axiale Eingriffstiefe benötigt, ausschließlich formschlüssig durch das wenigstens eine Eingriffselement in der Innenbohrung positioniert ist, ist nach Ausbau des Eingriffselementes der Verschlussstopfen für den Verschlussstopfen und das Gehäuse beschädigungsfrei aus der Innenbohrung ausbaubar und lässt sich der Verschlusstopfen mehrfach verwenden. Ferner weist der Grundkörper des Verschlussstopfens wenigstens in der außenliegenden, im Wesentlichen ebenen Frontseite eine, vorzugsweise zentrische, Gewindebohrung auf. Die Gewindebohrung ist als Sackbohrung ausgebildet, um ein Entnahmehilfswerkzeug (Abzieher) einschrauben zu können, beispielsweise zur Montage und/oder Demontage. Alternativ kann die Gewindebohrung axial durch den Grundkörper durchgehen, um wahlweise ein Entnahmehilfswerkzeug einschrauben zu können, oder die Gewindebohrung durch eine Verschlussschraube zu verschließen, oder in die Gewindebohrung eine axial durchgängige Schraubkomponente einzubringen, über die beispielsweise der Druck in der Innenbohrung abgegriffen oder Steuerdruck eingebracht werden kann. Das Gehäuse benötigt für die Unterbringung des Verschlussstopfens keine zusätzliche Baulänge. Der Verschlussstopfen ist in Einbaulage mit der ebenen außenliegenden Frontseite zumindest im Wesentlichen bündig mit oder sogar versenkt gegenüber der Außenseite des Gehäuses positioniert. Die Eingriffsvertiefung ist eine Ringnut im Außenumfang des scheibenförmigen Grundkörpers des Verschlussstopfens und ermöglicht eine beliebige Drehposition des eingebauten Verschlussstopfens. Dieser ist einfach herstellbar und bei der Montage oder Demontage bequem handhabbar. Die Innenbohrung benötigt zum Einbringen des Verschlussstopfens keine aufwändigen Bearbeitungsvorgänge. Die Montage bzw. Demontage benötigen nur wenige Handgriffe und sind in kurzer Zeit durchführbar.

Die Bohrung für den jeweiligen Stift, vorzugsweise einem Zylinderstift, kann eine Stufenbohrung sein, die sich durchgehend zwischen zwei gegenüberliegenden Seiten des Gehäuses erstreckt. Der Stift kann in die Bohrung eingepresst werden, und lässt sich, da beide Bohrungsenden zugänglich sind, problemlos wieder heraustreiben. In der Bohrung kann für den Stift an einem Ende ein Innengewinde für eine versenkte Sicherungsschraube vorgesehen sein und am gegenüberliegende Ende eine verengte Ausschiebemündung. Der Stift wird bis zum Anschlag eingeschoben und durch die Sicherungsschraube gesichert. Zur Demontage wird die Sicherungsschraube entnommen und wird der Stift von der Seite der Ausschiebemündung her herausgetrieben, z.B. mittels eines Dorns.

Bei einer zweckmäßigen Ausführungsform weist der Verschlussstopfen an der zur Mündung der Innenbohrung weisenden, außenliegenden Frontseite wenigstens eine Handhabe auf, vorzugsweise eine exzentrische Bohrung, die sich durch die Ringnut bis in die der Mündung abgewandte Ringnutflanke erstrecken kann. Dort kann mit einem Gegenhalter, vor allem bei der Demontage, angegriffen werden, oder mit einem hakenartigen Ausziehwerkzeug (Abzieher).

Besonders zweckmäßig sind sogar zwei zueinander versetzte, axiale Bohrungen als Handhabe vorgesehen, die den Ringnutgrund etwa tangieren oder sogar schneiden, so dass ein Hilfswerkzeug als zweifacher Gegenhalter eine stabile Abstützung findet.

Zweckmäßig weist die Innenbohrung an der Einbringseite des Verschlussstopfens einen weiteren Bohrungsabschnitt einer mindestens der Ringnutbreite entsprechenden Tiefe und über eine Ringschulter anschließend einen engeren Passbohrungsabschnitt einer z.B. dem Mehrfachen der O-Ringbreite entsprechenden Tiefe auf. Der Verschlussstopfen wird mit dem O-Ring bis in den Bereich des Passbohrungsabschnittes eingepresst, zweckmäßig mit einer Gleitpassung zwischen metallischen Flächen, z.B. von etwa 0,06 mm, um den Verschlussstopfen einwandfrei zu zentrieren, den O-Ring radial vorzuspannen, und ein Herauskriechen des O-Rings unter Druckeinwirkung auszuschließen. Der Verschlussstopfen weist am Grundkörper anschließend an die Ringnut eine kreiszylindrische Umfangspassfläche auf, in der wenigstens eine Umfangsnut für einen O-Ring geformt ist. Der O-Ring wird in der Umfangsnut vormontiert, gegebenenfalls eingefettet, bevor der Verschlussstopfen mit der Umfangspassfläche bis in den Passbohrungsabschnitt der Innenbohrung eingepresst wird.

An der in Einbaurichtung innenliegenden Frontseite des Grundkörpers des Verschlussstopfens können Bearbeitungs-Zentrier- und/oder Abstütz-Vertiefungen geformt sein, die die Bearbeitung des Verschlussstopfens erleichtern. Hierzu ist beispielsweise ein eingeformtes, sich in der Achse des Grundkörpers schneidendes Nutenkreuz zweckmäßig.

Anhand der Zeichnungen werden Ausführungsformen des Erfindungsgegenstandes erläutert. Es zeigen:
- Fig. 1: eine perspektivische Explosionsdarstellung eines Hydraulikbauteiles und eines Verschlussstopfens,
- Fig. 2: einen Längsschnitt des Hydraulikbauteiles mit eingebrachtem Verschlussstopfen,
- Fig. 3: einen Radialschnitt zu Fig. 2,
- Fig. 4: eine Frontansicht des Hydraulikbauteiles der Fig. 1 bis 3,
- Fig. 5: eine vereinfachte Ausführungsform des Verschlussstopfens in einem Axialschnitt, und
- Fig. 6: eine weitere Ausführungsform des Verschlussstopfens in einem Axialschnitt.

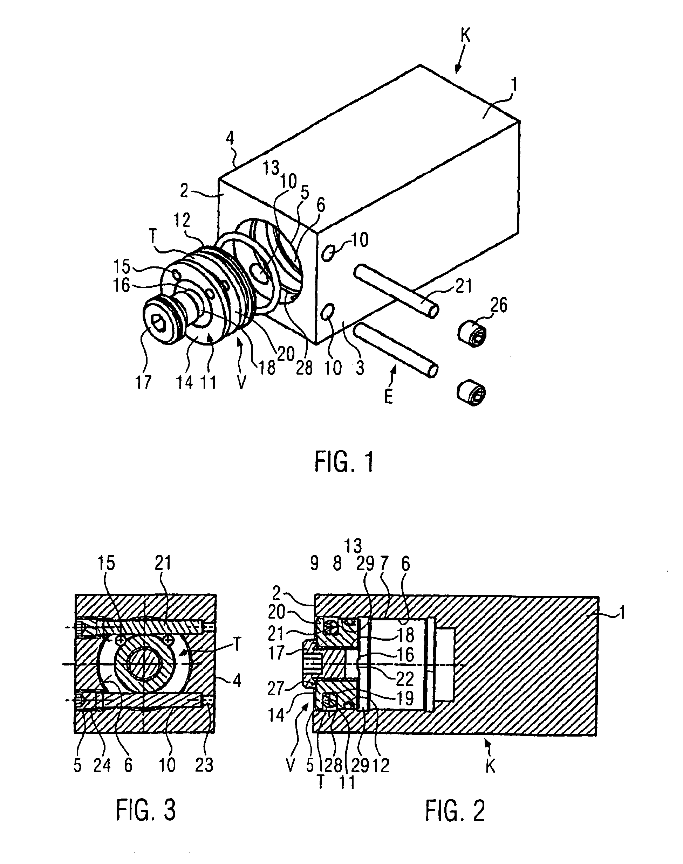

Fig. 1 verdeutlicht einen Hydraulikbauteil K, beispielsweise ein blockförmiges Gehäuse 1 eines Hydraulikventils oder Schieberventils oder dgl., wobei an einer Seite 2 des Gehäuses 1 eine Mündung 5 einer Innenbohrung 6, beispielsweise für nicht gezeigte Funktionskomponenten, z.B. einen Schieberkolben oder eine Ventilpatrone, zu sehen ist. In etwa senkrecht zur Achse der Innenbohrung 6 wird das Gehäuse 1 von wenigstens einer Bohrung 10 durchsetzt, die sich von einer Seite 3 durchgehend bis zur gegenüberliegenden Seite 4 erstreckt und die Innenbohrung 6 zumindest umfangsseitig schneidet. In der Ausführungsform in Fig. 1 sind zwei parallele Bohrungen 10 vorgesehen.

Die Mündung 5 der Innenbohrung 6 wird durch einen Verschlussstopfen V druckdicht verschlossen, der einen scheibenförmigen Grundkörper 11 mit kreiszylindrischem Außenumfang und einer im Wesentlichen ebenen in Einbaulage des Verschlussstopfens V außenliegenden Frontseite 14 aufweist. Im Grundkörper 11 ist eine umfangsseitige Eingriffsvertiefung T, zweckmäßig eine Ringnut 20, geformt. An der der Frontseite 14 abgewandten Seite der Ringnut 20 schließt sich eine Umfangsnut 12 für einen dort einzuknüpfenden O-Ring 13 an. In der Frontseite 14 ist wenigstens eine Handhabe 15 geformt, zweckmäßig zwei versetzte Axialbohrungen, die sich durch die Ringnut 20 bis in die gegenüberliegende Ringnutflanke erstrecken und für eine Gegenhalterfunktion zweckmäßig sein können, beispielsweise um einem Drehmoment gegenzuhalten oder die Drehposition des Grundkörpers 11 nach Einbringen oder beim Einbringen zu korrigieren oder den Verschlussstopfen V herauszuziehen.

Wenigstens ein Eingriffselement E, beispielsweise ein Stift 21, vorzugsweise ein Zylinderstift, dient zum Positionieren des eingebrachten Verschlussstopfens V in Einbaulage in der Innenbohrung 6. Im in Fig. 1 gezeigten Ausführungsbeispiel (siehe auch Fig. 2 und 3) werden zwei Stifte 21 in die Bohrungen 10 eingebracht, nachdem der Grundkörper 11 eingeschoben ist, so dass die Stifte 21 an diametral gegenüberliegenden Seiten in die Ringnut 20 eingreifen. Jeder Stift 21 kann durch eine bündig eingeschraubte Sicherungsschraube 26 gesichert werden.

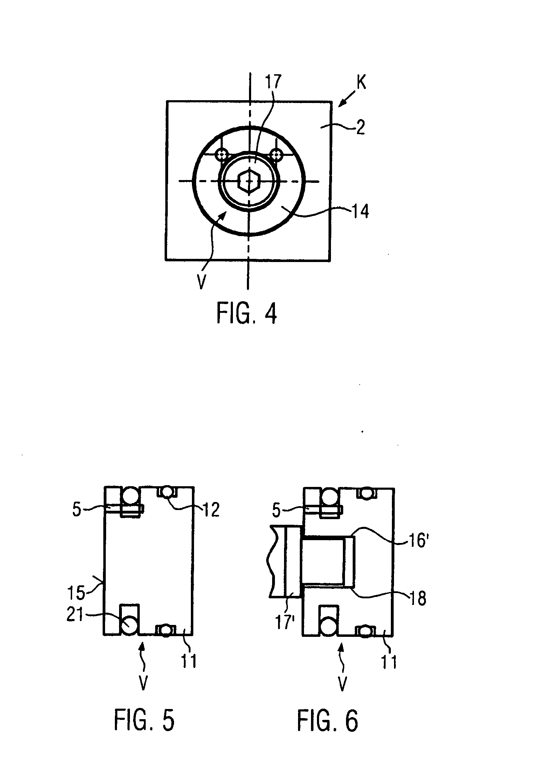

In der in Fig. 1 gezeigten Ausführungsform des Verschlussstopfens V ist dieser optional mit einer zentrischen Bohrung 16 ausgebildet, die ein Innengewinde 18 enthält und entweder als Sackbohrung (Fig. 6) oder als durchgängige Bohrung (Fig. 2) ausgebildet ist, und durch eine Verschlussschraube 17 dicht verschlossen wird. Die Verschlussschraube 17 kann auch als Entnahmewerkzeug (Abzieher) verwendet werden, oder es wird an ihrer Stelle ein Entnahmehilfswerkzeug in die Bohrung 16 eingeschraubt. Die optionale Ausbildung des Grundkörpers 11 mit der durchgängigen Bohrung 16 ermöglicht auch die Verwendung einer axial durchgängigen Einschraubkomponente (nicht gezeigt) in der Bohrung, beispielsweise um den Druck (oder die Temperatur) in der Innenbohrung abgreifen oder einen Steuerdruck einbringen zu können. Wird keine durchgängige Schraubkomponente in die durchgängige Bohrung 16 eingeschraubt, dann kann diese durch die Verschlussschraube 17 dicht verschlossen sein. Um einen Überstand der Verschlussschraube 17 zu vermeiden, kann der Verschlussstopfen V in Einbaulage um die Höhe des Kopfes der Verschlussschraube tiefer versenkt positioniert werden.

In den Fig. 2 bis 4 ist die Einbaulage des Verschlussstopfens V gezeigt. Die Innenbohrung 6 im Gehäuse 1 des Hydraulikbauteiles K weist einen beispielsweise kreiszylindrischen Arbeitsabschnitt 7 auf, und über einen Einstich 29 davon getrennt einen Passbohrungsabschnitt 8 einer Tiefe entsprechend der mehrfachen Weite des O-Ringes 13. Daran schließt sich bis zur Mündung 5 über eine Ring- oder Konusschulter 28 ein Bohrungsabschnitt 9 mit noch größerem Innendurchmesser an. Der Grundkörper 11 des Verschlussstopfens weist anschließend an die Ringnut 20 eine kreiszylindrische Umfangspassfläche 29 einer Tiefe z.B. entsprechend einem Mehrfachen der Weite des O-Ringes 13 auf, und an der innenliegenden Frontseite optional gegebenenfalls Bearbeitungs-Zentrier- und/oder Abstütz-Vertiefungen 22, beispielsweise in Form sich im Zentrum des Grundkörpers 11 schneidender oder überkreuzender Nuten.

In der Einbaulage in den Fig. 2 bis 4 ist der Verschlussstopfen so weit in die Innenbohrung 6 eingeschoben, dass der Umfangspassabschnitt 29 in den Passbohrungsabschnitt 8 eingetreten ist (Passung beispielsweise etwa 0,06 mm) und der O-Ring radial komprimiert und gegen Kaltfließen gesichert ist. Die Stifte 21 sind in die Bohrungen 10 eingebracht und durchsetzen die Ringnut 20, um den Verschlussstopfen in der Einbaulage zu positionieren. Die Verschlussschraube 17 verschließt die optional vorgesehene Bohrung 16 nach außen, wobei eine Dichteinrichtung 27 beispielsweise am Kopf der Verschlussschraube 17 wirksam ist.

Die in Fig. 3 angedeuteten Bohrungen der Handhabe 15 (zwei versetzte Axialbohrungen) schneiden in der gezeigten Ausführungsform den Ringnutgrund im Grundkörper 11. Jeder Stift 21 ist bis zur Ausschiebemündung 23 eingetrieben und durch eine Sicherungsschraube 26 gesichert.

Um beispielsweise die Verschlussschraube 17 lösen zu können, kann die Handhabe 15 als Gegenhalter benutzt werden, beispielsweise falls anstelle der Verschlussschraube 17 eine durchgängige Schraubkomponente montiert werden soll.

Zur Demontage des Verschlussstopfens V werden die Stifte 21 ausgebaut, und wird dann entweder an der Handhabe 15 oder, falls die Bohrung 16 mit dem Innengewinde 18 vorgesehen ist, mit einem Abzieher oder einem Entnahmehilfswerkzeug, das eingeschraubt wird, der Verschlussstopfen V herausgezogen, ohne den Verschlussstopfen V oder das Gehäuse 1 zu beschädigen.

Fig. 5 verdeutlicht eine einfache Ausführungsform des Verschlussstopfens V, dessen Grundkörper 11 massiv und ohne Bohrung 16 ausgebildet ist, und der zur Demontage z.B. unter Nutzen der Handhabe 15 aus der Einbaulage herausgezogen werden könnte.

Fig. 6 verdeutlicht eine Ausführungsform des Verschlussstopfens V, dessen zentrale Bohrung 16' mit dem Innengewinde 18 als Sackbohrung ausgebildet ist, so dass zur Demontage dort ein Entnahmehilfswerkzeug 17' eingeschraubt werden kann (Abzieher), wobei gegebenenfalls beim Einschrauben die Handhabe 5 als Gegenhalter zum Abfangen des Einschraubdrehmomentes nutzbar ist.

## Patentansprüche

1. Hydraulikbauteil (K) mit einem wenigstens eine druckführende Innenbohrung (6) enthaltenden Gehäuse (1), deren Innenbohrung (6) durch einen Verschlussstopfen (V) und wenigstens einem zwischen dem Verschlussstopfen (V) und der Innenbohrungswand eingesetzten O-Ring (13) druckdicht verschlossen ist, wobei der Verschlussstopfen (V) an der der Druckseite in der Innenbohrung (6) abgewandten Seite wenigstens eine Eingriffsvertiefung (T) für wenigstens ein im Gehäuse (1) die Innenbohrung (6) kreuzendes Eingriffselement (E) aufweist, das ein Stift (21) in einer im Gehäuse (1) die Innenbohrung (6) zumindest umfangsseitig durchschneidenden Bohrung (10) ist und den Verschlussstopfen (V) in der Innenbohrung (6) so positioniert, dass der Verschlussstopfen (V) nach Ausbau zumindest des Eingriffselementes (E) für den Verschlussstopfen (V) und das Gehäuse (1) beschädigungsfrei aus der Innenbohrung (6) ausbaubar ist, **dadurch gekennzeichnet, dass** der Verschlussstopfen (V) scheibenförmig mit einer in Einbaulage außenliegenden, im Wesentlichen ebenen Frontseite (14) und einer innenliegenden Frontseite ist und in der außenliegenden Frontseite (14) wenigstens eine zur Achse der Innenbohrung (6) parallele Bohrung (16) mit einem Innengewinde (18) aufweist, die entweder als zur außenliegenden Frontseite (14) offene Blindbohrung oder als zur innenliegenden Frontseite führende Durchgangsbohrung ausgebildet ist, dass in die Bohrung (16) wahlweise ein Entnahmehilfswerkzeug oder eine Verschlussschraube (17) oder eine axial durchgängige Schraubkomponente einschraubbar ist, dass die Eingriffsvertiefung (T) eine Ringnut (20) im Außenumfang eines Grundkörpers (11) der Verschlussstopfens (V) ist, und dass der Verschlussstopfen (V) mit seiner außenliegenden Frontseite (14) in Einbaulage in der Innenbohrung (6) zumindest im Wesentlichen bündig mit oder versenkt gegenüber einer Außenseite (2) des Gehäuses (1) positioniert ist.

2. Hydraulikbauteil nach Anspruch 1, **dadurch gekennzeichnet, dass** die den Stift (10), vorzugsweise einen Zylinderstift, enthaltende Bohrung (10) eine Stufenbohrung zwischen zwei gegenüberliegenden Seiten (3, 4) des Gehäuses (1) ist, die an einem Ende ein Innengewinde (25) für eine versenkte Sicherungsschraube (26) und am gegenüberliegenden Ende eine verengte Ausschiebemündung (23) aufweist.

3. Hydraulikbauteil nach Anspruch 1, **dadurch gekennzeichnet, dass** der Verschlussstopfen (V) an der zur Mündung der Innenbohrung (6) weisenden, außenliegenden Frontseite (14) wenigstens eine eingeformte Handhabe (15) aufweist, vorzugsweise eine exzentrische Bohrung, die sich, vorzugsweise, durch die Ringnut (20) bis in die der Mündung abgewandte Ringnutflanke erstreckt.

4. Hydraulikbauteil nach Anspruch 3, **dadurch gekennzeichnet, dass** die Handhabe (15) mindestens zwei zueinander versetzte, axiale Bohrungen sind, die in etwa den Ringnutgrund tangieren oder schneiden.

5. Hydraulikbauteil nach Anspruch 1, **dadurch gekennzeichnet, dass** die Innenbohrung (6) an der Einbringseite des Verschlussstopfens (V) einen weiteren Bohrungsabschnitt (9) einer mindestens der Ringnutweite entsprechenden Tiefe und über eine Ringschulter (28) anschließend einen engeren Passbohrungsabschnitt (8) einer dem Mehrfachen der O-Ringbreite entsprechenden Tiefe aufweist, und dass der Verschlussstopfen (V) anschließend an die Ringnut (20) eine kreiszylindrische Umfangspassfläche (29) aufweist, in der wenigstens eine Umfangsnut (12) für den O-Ring (13) geformt ist.

6. Hydraulikbauteil nach Anspruch 1, **dadurch gekennzeichnet, dass** der Verschlussstopfen (V) an der in Einbaurichtung innenliegenden Frontseite Bearbeitungs-, Zentrier- und/oder Stütz-Vertiefungen (22) aufweist.

## Claims

1. Hydraulic component (K), comprising a housing (1) containing at least one interior bore (6) for pressurised hydraulic medium, the interior bore (6) being closed in pressure-tight fashion by a closing plug (V) and at least one O-ring (13) inserted between the closing plug (V) and a wall of the interior bore, wherein the closing plug (V) comprises for at least one engaging element (E) crossing the interior bore (6) in the housing (1) an engagement depression (T) at a side remote from the pressure side in the interior bore (6), which engaging element (E) is a pin (1) is located in a bore (10) intersecting at least with the periphery of the interior bore (6) in the housing (1) and positioning the closing plug (V) such in the interior bore (6) that the closing plug (V) can be removed without damage from the interior bore (6) after removing at least the engaging element (E), **characterised in that** the closing plug (V) has the shape of a disc with a substantially planar front side (14) being situated in assembled condition at the outer side and an inner front side, that the closing plug (V) has at least one bore (16) including an interior thread (18) in the outside front side (14), the bore (16) being parallel to the axis of the interior bore (6), the bore (16) being formed either as a blind bore opening to the front side (14) or as a through bore extending from the front side (14) to the inner front side, that one of a removing auxiliary tool or a closing screw (17), or an axially open screw-in component can be selectively screwed into the bore (16), that the engagement depression (T) is a ring groove (20) in the outer periphery of a base body (11) of the closing plug (V), and that the closing plug (V) in assembled condition in the interior bore (6) is positioned with its outside front side (14) such that the outside front side (14) is substantially flush or somewhat recessed with respect to an outer side (2) of the housing (1).

2. Hydraulic component according to claim 1, **characterised in that** the bore (10) containing the pin (10), preferably a cylindrical pin, is a stepped bore extending between two opposite sides (3, 4) of the housing (1), and that the bore (10) has at one end an interior thread (25) for a recessed securing screw (26) and a narrowed pushing out opening (23) at the opposite end.

3. Hydraulic component according to claim 1, **characterised in that** the closing plug (V) comprises at least one moulded-in operating handle (15) at the front side (14) facing to the mouth of the interior bore (6), preferably an eccentrically positioned bore which, preferably, extends through the ring groove (20) into a ring groove flank remote from the mouth of the interior bore (6).

4. Hydraulic component according to claim 3, **characterised in that** the operating handle (15) comprises at least two axial bores which are offset with respect to each other and which either are tangential to the bottom of the ring groove or intersect the bottom of the ring groove.

5. Hydraulic component according to claim 1, **characterised in that** the interior bore (6) includes a further bore section (9) having a depth corresponding at least with the width of the ring groove and being situated at an insertion side of the closing plug (V), and a narrower fitting bore section (8) continuing the bore section (9) via a ring shoulder (28) and having a depth corresponding to a multiple of the width of the O-ring (13), and that the closing plug (V) has a circular cylindrical circumferential fitting surface (29) in continuation of the ring groove in which fitting surface (29) at least one circumferential groove (12) is formed for receiving the O-ring (13).

6. Hydraulic component according to claim 1, **characterised in that** the closing plug (V) has machining depressions, centring depressions and/or supporting depressions (22) at the inner front side being situated in inserting direction at the inner side of the closing plug (V).

## Revendications

1. Composant hydraulique (K) comprenant un carter (1) renfermant au moins un alésage intérieur (6) conduisant la pression, l'alésage intérieur (6) du carter étant fermé de manière étanche à la pression par un bouchon d'obturation (V) et au moins un joint torique (13) placé entre le bouchon d'obturation (V) et la paroi de l'alésage intérieur, composant hydraulique dans lequel le bouchon d'obturation (V) présente, du côté éloigné du côté pression dans l'alésage intérieur (6), au moins un creux d'engrènement (T) pour au moins un élément d'engrènement (E), qui croise l'alésage intérieur (6) dans le carter (1), est une broche (21) dans un alésage (10) coupant l'alésage intérieur (6) au moins en périphérie dans le carter (1), et positionne le bouchon d'obturation (V) dans l'alésage intérieur (6) de manière telle, que le bouchon d'obturation (V) puisse, après démontage au moins de l'élément d'engrènement (T), être démonté de l'alésage intérieur (6), sans endommagement pour le bouchon d'obturation (V) et le carter (1),
**caractérisé**
**en ce que** le bouchon d'obturation (V) est en forme de disque avec une face frontale (14) sensiblement plane, située à l'extérieur en position implantée, et une face frontale située à l'intérieur, et présente dans la face frontale (14) située à l'extérieur, au moins un alésage (16) à filetage intérieur (18), qui est parallèle à l'axe de l'alésage intérieur (6), et est réalisé soit sous la forme d'alésage borgne ouvert sur la face frontale (14) située à l'extérieur, soit sous la forme d'un alésage de passage menant à la face frontale située à l'intérieur,
**en ce que** dans l'alésage (16) peut être vissé sélectivement un outil d'aide au démontage, ou une vis de fermeture (17), ou un composant à visser, axialement traversant,
**en ce que** le creux d'engrènement (T) est une rainure annulaire (20) dans la périphérie extérieure du corps de base (11) du bouchon d'obturation (V),
et **en ce qu'**en position d'implantation dans l'alésage intérieur (6), le bouchon d'obturation (V), avec sa face frontale (14) située à l'extérieur, est positionné de manière à arriver au moins sensiblement au ras de la face extérieure (2) du carter (1) ou de manière à être noyé dans celle-ci.

2. Composant hydraulique selon la revendication 1, **caractérisé en ce que** l'alésage (10) renfermant la broche (10), de préférence une broche cylindrique, est un alésage étagé entre deux côtés opposés (3, 4) du carter (1), qui présente, à une extrémité, un filetage intérieur (25) pour une vis d'arrêt (26) noyée, et, à l'extrémité opposée, un orifice rétréci (23) d'aide à l'extraction.

3. Composant hydraulique selon la revendication 1, **caractérisé en ce que** le bouchon d'obturation (V) présente, sur la face frontale (14) située à l'extérieur et dirigée vers l'orifice de l'alésage intérieur (6), au moins une prise (15) qui y est formée, de préférence un alésage excentrique, s'étendant, de préférence, à travers la rainure annulaire (20) jusqu'au flanc de rainure le plus éloigné de l'orifice.

4. Composant hydraulique selon la revendication 3, **caractérisé en ce que** la prise (15) est constituée par au moins deux alésages d'orientation axiale, décalés l'un par rapport à l'autre, qui tangentent ou coupent environ le fond de la rainure annulaire.

5. Composant hydraulique selon la revendication 1, **caractérisé en ce que** l'alésage intérieur (6) présente, du côté de l'introduction du bouchon d'obturation (V), un autre tronçon d'alésage (9) d'une profondeur correspondant au moins à la largeur de la rainure annulaire, et, s'y raccordant par l'intermédiaire d'un épaulement annulaire (28), un tronçon d'alésage ajusté (8) plus étroit, d'une largeur correspondant à un multiple de la largeur de joint torique, et **en ce que** le bouchon d'obturation (V) présente, à la suite de la rainure annulaire (20), une surface périphérique d'ajustement (29), cylindrique circulaire, dans laquelle est formée au moins une rainure périphérique (12) pour le joint torique (13).

6. Composant hydraulique selon la revendication 1, **caractérisé en ce que** le bouchon d'obturation (V) présente sur sa face frontale située à l'intérieur dans la direction de montage, des creux d'usinage, de centrage et/ou d'appui (22).
